# EUROPÄISCHE PATENTSCHRIFT

(11) **EP 1 850 716 B1**
(45) Veröffentlichungstag und Bekanntmachung des Hinweises auf die Patenterteilung: **05.01.2011**
(21) Anmeldenummer: 06707916.0
(22) Anmeldetag: 31.01.2006
(51) Int. Cl.: A47J 37/08

(54) **TOASTER**
TOASTER
GRILLE-PAIN

(30) Priorität: 11.02.2005 DE 102005006385
(43) Veröffentlichungstag der Anmeldung: 07.11.2007
(73) Patentinhaber: BSH Bosch und Siemens Hausgeräte GmbH, 81739 München (DE)
(72) Erfinder: KRAMER, Siegmund, 83417 Kirchanschöring (DE); SCHÖNFELDER, Thomas, 83250 Marquartstein (DE); STEFFL, Michael, 83250 Marquartstein (DE)
(74) Vertreter: Dosterschill, Peter
(86) Internationale Anmeldenummer: PCT/EP2006/050544
(87) Internationale Veröffentlichungsnummer: WO 2006/084801

(56) Entgegenhaltungen:
- EP-A- 0 314 826
- EP-A- 0 901 767
- WO-A-02/053000
- FR-A- 2 832 914
- GB-A- 641 853
- US-A- 2 266 301
- US-A- 2 615 386

## Beschreibung

Die Erfindung betrifft einen Toaster gemäß dem Oberbegriff von Anspruch 1.

Es sind viele unterschiedliche Bauformen von Toastern bekannt. Fast allen diesen Toastern ist gemeinsam, dass Betätigungsmittel zum Bewegen von Bauteilen des Toasters vorgesehen sind. Beispielsweise kennt man Toaster mit Schiebern, die einerseits dafür vorgesehen sein können, einen Röstgutträger abzusenken und den Toaster dabei einzuschalten, und andererseits dafür, dass ein in den Toaster integrierter Brötchenaufsatz abgesenkt und angehoben werden kann.

In der EP 0 450 457 B1 wurde auch bereits vorgeschlagen, die geradlinige Bewegung eines Röstgutträgers durch eine manuell veranlasste Drehbewegung zu erzeugen. Zu diesem Zwecke wurde eine vergleichsweise aufwendige, einen großen Bauraum einnehmende und materialintensive Lösung mit einer Zahnstange und einem in diese Zahnstange eingreifenden drehbaren Zahnsegment als Umsetzmittel der Drehbewegung in die geradlinige Bewegung erdacht.

Die FR 2 832 914 A1 offenbart einen elektrischen Toaster mit einer Röstkammer, einem in der Röstkammer bewegbaren Toastträger, Sperrmittel, die den Toastträger in einer Röststellung halten, Rückholmittel, die den Träger in eine Entnahmeposition überführen, sobald die Sperrmittel inaktiv werden, und einen Mechanismus, der die Hebegeschwindigkeit des Trägers von der Röststellung in die Entnahmestellung abbremst, wobei der Mechanismus ein rotatorisch bewegbares Bauteil umfasst.

Der Erfindung liegt die Aufgabe zugrunde, einen Toaster mit einem Brötchenaufsatz zur Verfügung zu stellen, bei dem eine geradlinige Bewegung in einfacher Weise durch eine Drehbewegung herbeigeführt wird.

Diese Aufgabe wird mit den Merkmalen des unabhängigen Anspruchs gelöst.

Vorteilhafte Ausführungsformen der Erfindung sind in den abhängigen Ansprüchen angegeben.

Die Erfindung baut auf einem gattungsgemäßen Toaster mit einem Brötchenaufsatz dadurch auf, dass die Umsetzmittel ein abschnittsweise geradlinig bewegbares Zugmittel aufweisen, das mit dem mindestens einem beweglichen Bauteil insbesondere im geradlinigen Abschnitt gekoppelt sind. Hierdurch liegt eine einfache und wirkungsvolle Möglichkeit vor, eine Drehbewegung in eine geradlinige Bewegung umzusetzen, insbesondere im Vergleich zu Lösungen des Standes der Technik, die mit einer Zahnstange und einem mit der Zahnstange kämmenden Zahnsegment arbeitet. Zugmittel sind u.a. reibschlüssige Zugmittel, wie z.B. Flachriemen, Keilriemen oder Rundriemen, oder formschlüssige Zugmittel, wie beispielsweise Zahnriemen.

Erfindungsgemäß ist vorgesehen, dass das bewegliche Bauteil ein Brötchenaufsatz ist, der veranlasst durch die Drehbewegung zwischen einer angehobenen Stellung und einer abgesenkten Stellung überführbar ist.

Gemäß einer bevorzugten Lösung ist vorgesehen, dass das Zugmittel über ein Riemenrad und ein Umlenkrad geführt wird, wobei das Riemenrad größer ist als das Umlenkrad und wobei dem Riemenrad über mindestens ein Bedienelement die Drehbewegung zuführbar ist. Da das Riemenrad groß gewählt ist, lässt sich unter Verwendung eines vergleichsweise geringen Drehwinkelbereiches das bewegliche Element über einen vergleichsweise langen Weg bewegen. Dies ist dem Bedienungskomfort zuträglich, da beim Drehen des Riemenrades nicht umgegriffen werden muss. Beispielsweise können Drehbewegungen um einen Winkel zwischen 90° und 120° ausreichend sein, um das bewegliche Bauteil über ausreichend große Bewegungsbereiche zu führen.

Die Erfindung ist weiterhin dadurch in nützlicher Weise ausgebildet, dass das Riemenrad zwei Anschläge aufweist, worüber eine erste Endstellung und eine zweite Endstellung für die Drehbewegung definiert sind, dass die erste Endstellung mit der ersten Stellung des beweglichen Bauteils korrespondiert und dass die zweite Endstellung mit der zweiten Stellung des beweglichen Bauteils korrespondiert. Im Hinblick auf den Bedienkomfort ist es besonders nützlich, Anschläge vorzusehen, die direkt auf ein die Drehbewegung ausführendes Elements wirken.

Weiterhin ist die Erfindung dadurch in besonders nützlicher Weise ausgebildet, dass die Bewegung des Zugmittels beziehungsweise der mitbewegten Bauteile unmittelbar und/oder mittelbar gedämpft ist. Dient das Zugmittel dem Bewegen des Röstgutträgers, ist somit ausgeschlossen, dass der Röstgutträger bei Beendigung des Röstvorgangs hochschnellt und somit Lärm erzeugt. Ebenfalls wird ein unerwünschtes Herausschleudern der Brotscheiben aus dem Toaster aufgrund der Dämpfung vermieden.

Beispielsweise kann vorgesehen sein, dass die Bewegung des Zugmittels beziehungsweise der mitbewegten Bauteile durch Reibung des Zugmittels gedämpft ist.

Es kann aber auch zusätzlich oder alternativ vorgesehen sein, dass die Bewegung des Zugmittels beziehungsweise der mitbewegten Bauteile durch ein in seiner Drehbewegung gedämpftes Zahnrad gedämpft ist, das mit einem innerhalb des Außenumfangs des Riemenrades liegenden gezahnten Bereich des Riemenrades kämmt.

Als weitere Maßnahme kann vorgesehen sein, dass die Bewegung des Zugmittels beziehungsweise der mitbewegten Bauteile dadurch gedämpft ist, dass das Umlenkrad in seiner Drehbewegung gedämpft ist.

Es ist bevorzugt, dass ein über eine Röstgutaufnahmeöffnung schwenkbarer Deckel vorgesehen ist, der zwischen einer geschlossenen und einer geöffneten Stellung bewegbar ist, und dass ein Bimetallelement in der Weise mit einem Mechanismus gekoppelt ist, dass sich der Deckel bei Erwärmung des Toasters automatisch in seine geöffnete Stellung bewegt und/oder der in der geöffneten Stellung befindliche Deckel bei erwärmtem Toaster in seiner geöffneten Position verriegelt ist. Durch das Bimetallelement kann in jedem Fall vermieden werden, dass sich der Deckel trotz erwärmtem Toaster in seiner geschlossenen Stellung befindet. Schaltet man den Toaster beispielsweise unbeabsichtigt ein, so öffnet sich der Deckel in jedem Fall. Zusätzlich oder alternativ ist aber auch vorgesehen, dass ein Verschließen des Deckels bei noch warmen Toaster vermieden wird, indem nämlich der Deckel in der geöffneten Position verriegelt ist.

Die Erfindung ist in vorteilhafter Weise dadurch weitergebildet, dass der Deckel durch eine Feder in Richtung seiner geöffneten Stellung belastet ist, dass der Deckel über eine mit dem Deckel verbundene Welle gegen die Federkraft in seine geschlossene Stellung überführbar ist, wobei der Deckel in der geschlossenen Stellung gehalten werden kann, und dass der in der geschlossenen Stellung gehaltene Deckel bei Erwärmung des Toasters freigegeben wird, so dass er durch die Federkraft in seine geöffnete Stellung überführbar ist. Da die Federkraft in Richtung der geöffneten Stellung des Deckels wirkt, muss zum Öffnen des Deckels lediglich eine Sperre entfernt werden. Dies ist im Vergleich zu einer vorgespannten geöffneten Deckelstellung eine sicherere Variante, da ein unbeabsichtigtes Entfernen einer Sperre in jedem Fall die Überführung des Deckels in die sichere, das heißt die geöffnete Stellung veranlasst.

Es ist weiterhin nützlich, dass das Halten des Deckels in seiner geschlossenen Stellung durch ein zwischen einer ersten Stellung und einer zweiten Stellung überführbares Haltebeziehungsweise Verriegelungselement erfolgt, wobei das Halten des Deckels in der ersten Stellung erfolgt, und dass das Überführen des Halte- beziehungsweise Verriegelungselementes durch eine temperaturabhängige Bewegung des Bimetallelementes erfolgt. Ein solches Halte- beziehungsweise Verriegelungselement bildet somit die funktionale Schnittstelle zwischen dem Bimetallelement und dem Deckel. Es kann im Hinblick auf seine Aufgabe optimiert werden und weitere Funktionen erfüllen.

In diesem Sinne ist vorgesehen, dass das Verriegeln des Deckels in seiner geöffneten Stellung durch ein zwischen einer ersten Stellung und einer zweiten Stellung überführbares Halte- beziehungsweise Verriegelungselement erfolgt, wobei das Verriegeln des Deckels in der zweiten Stellung erfolgt, und dass das Überführen des Halte- beziehungsweise Verriegelungselementes durch eine temperaturabhängige Bewegung des Bimetallelementes erfolgt. Es ist demnach besonders vorteilhaft, dass dasselbe Halte- beziehungsweise Verriegelungselement für das Halten des Deckels in der geschlossenen Stellung und das Verriegeln des Deckels in der geöffneten Stellung verantwortlich ist.

Gemäß einer weiteren bevorzugten Ausführungsform ist vorgesehen, dass die Bewegung des Bimetallelementes mittels eines federbelasteten Kippelementes in eine Bewegung des Halte- beziehungsweise Verriegelungselementes umgesetzt wird, dass das Kippelement eine erste stabile Endstellung hat, die es bei erkaltetem Bimetall einnimmt, dass durch Bewegung des Bimetallelementes das Kippelement bei Überschreiten einer Übergangsstellung in eine zweite stabile Endstellung umklappt und dass die erste stabile Endlage der ersten Stellung des Halte- beziehungsweise Verriegelungselementes entspricht und die zweite stabile Endlage der zweiten Stellung des Halte- beziehungsweise Verriegelungselementes entspricht. Neben der Möglichkeit, die Bewegung des Bimetallelementes direkt in eine Bewegung des Halte- beziehungsweise Verriegelungselementes umzusetzen, ist es also auch möglich, ein weiteres Element an der Schnittstelle zwischen Bimetallelement und Deckel einzusetzen. Das als Adapter zwischen dem Bimetallelement und dem Halte- beziehungsweise Verriegelungselement wirkende Kippelement hat zwei stabile Stellungen, in die es praktisch "digital" überführbar ist, wobei dies durch die entsprechende Bewegung des Bimetallelementes über eine Übergangsstellung hinweg erfolgt.

Es ist weiterhin bevorzugt, dass das Halte- beziehungsweise Verriegelungselement als Wippe mit einem ersten Endbereich und einem zweiten Endbereich ausgebildet ist und dass der erste Endbereich in der ersten Stellung des Halte- beziehungsweise Verriegelungselementes das Halten des Deckels vermittelt und der zweite Endbereich in der zweiten Stellung des Halte- beziehungsweise Verriegelungselementes das Verriegeln des Deckels vermittelt. Damit ist die Doppelfunktion des Halte- beziehungsweise Verriegelungselementes in einfacher Weise realisiert.

Die Erfindung ist ferner nützlicherweise so weitergebildet, dass die mit dem Deckel verbundene Welle durch einen Drehknopf drehbar ist und dass der Drehknopf einen sich in radiale Richtung erstreckenden Fortsatz aufweist, der von dem Halte- beziehungsweise Verriegelungselement gehalten beziehungsweise verriegelt werden kann. Insofern hat auch der Drehknopf eine Doppelfunktion. Er dient einerseits als Bedienelement und andererseits über seinen Fortsatz als Koppelelement zwischen dem Halte- beziehungsweise Verriegelungselement und der den Deckel bewegenden Welle.

Es ist bevorzugt, dass das Riemenrad mindestens einen Mitnehmer aufweist, der, ausgehend vom geschlossenen Zustand des Deckels, beim Absenken des Röstgutträgers den Fortsatz des Drehknopfes mitnimmt, so dass der Deckel in den geöffneten Zustand übergehen kann. Auf diese Weise wird sichergestellt, dass der Deckel beim Einschalten des Toasters stets geöffnet wird, falls er sich vor dem Einschaltvorgang noch im geschlossenen Zustand befindet. Der Drehknopf mit seinem Fortsatz erhält auf diese Weise noch eine weitere Funktion. Wie erwähnt, ist er Bedienelement und Schnittstelle zum Halte- beziehungsweise Verriegelungselement, weiterhin ist er aber auch Gegenstück zu Mitnehmer, damit dieser den Deckel beim Einschalten des Toasters öffnen kann.

Nützlicherweise ist ferner vorgesehen, dass der Drehknopf gegen eine Feder in axiale Richtung verschoben werden kann, so dass, ausgehend vom geschlossenen Zustand des Deckels, eine axiale Verschiebung des Drehknopfes ein Freigeben des Deckels bewirkt, so dass er durch die Federkraft der den Deckel in seine geöffnete Stellung belastenden Feder in seine geöffnete Stellung überfühbar ist. Im Normalfall wird man den Deckel auf diese Weise öffnen, da ein Einschalten des Toasters erst nach Einlegen des Röstgutes erfolgt. Wiederrum wird die besonders vorteilhafte Ausgestaltung des Drehknopfes deutlich, da dieser zusätzlich zu seinen bisher beschriebenen Funktionen eine weitere Funktion im Hinblick auf die Bedienung des Toasters vermittelt.

Es ist ebenfalls besonders bevorzugt, dass der Mitnehmer am Riemenrad ein sich in axiale Richtung erstreckender Bereich zur Befestigung des Bedienelementes am Riemenrad ist. Somit hat auch der Mitnehmer eine Doppelfunktion.

Der erfindungsgemäße Toaster ist in besonders vorteilhafter Weise dadurch weitergebildet, dass die Bewegung des Deckels beziehungsweise der mitbewegten Bauteile durch Reibung gedämpft ist. Hierdurch wird ein materialbelastendes und lärmerzeugendes schnelles Aufspringen des Deckels verhindert. Vielmehr öffnet sich der Deckel in langsamer und daher besonders ansprechender Weise.

In diesem Zusammenhang kann vorgesehen sein, dass die Bewegung des Deckels beziehungsweise der mitbewegten Bauteile durch ein an dem Deckel beziehungsweise einem mitbewegten Bauteil befestigtes in seiner Drehbewegung gedämpftes Zahnrad gedämpft ist, das mit einem gehäusefesten gezahnten Bereich kämmt.

Im Hinblick auf das Halten und das Verriegeln des Deckels ist nützlicherweise vorgesehen, dass das Bimetallelement in thermischem Kontakt mit einem Reflektor des Röstraums steht. An einem Reflektor des Toasters sind hohe Temperaturgradienten zu erwarte, so dass das Bimetallelement rasch die für die Beeinflussung der Deckelstellung erforderlichen Auslenkungen erfährt.

Die Erfindung wird nun mit Bezug auf die begleitenden Zeichnungen anhand besonders bevorzugter Ausführungsformen beispielhaft erläutert. Dabei zeigt:
- Figur 1: eine perspektivische Darstellung eines Toasters;
- Figur 2: eine weitere perspektivische Darstellung eines Toasters;
- Figur 3: eine weitere perspektivische Darstellung eines Toasters;
- Figur 4: eine perspektivische Teildarstellung einer ersten Gehäusebaugruppe sowie ei- ne perspektivische Darstellung einer zweiten Gehäusebaugruppe eines Toasters;
- Figur 5: eine perspektivische Teildarstellung der ersten Gehäusebaugruppe sowie eine perspektivische Darstellung der zweiten Gehäusebaugruppe eines Toasters während des Zusammenfügens der Gehäusebaugruppen;
- Figur 6: eine perspektivische Darstellung eines Teils der zweiten Gehäusebaugruppe sowie eines mit der zweiten Gehäusebaugruppe zusammenwirkenden Röstgut- trägers eines Toasters;
- Figur 7: eine weitere perspektivische Darstellung eines Teils der zweiten Gehäusebau- gruppe sowie eines mit der zweiten Gehäusebaugruppe zusammenwirkenden Röstgutträgers mit Mekmalen eines erfindungsgemäßen Toasters;
- Figur 8: eine perspektivische Teildarstellung der ersten Gehäusebaugruppe sowie von der zweiten Gehäusebaugruppe zugeordneten Komponenten eines Toasters in einem ersten Zustand;
- Figur 9: eine perspektivische Teildarstellung der ersten Gehäusebaugruppe sowie von der zweiten Gehäusebaugruppe zugeordneten Komponenten eines Toasters in einem zweiten Zustand;
- Figur 10: eine perspektivische Teildarstellung der ersten Gehäusebaugruppe sowie von der zweiten Gehäusebaugruppe zugeordneten Komponenten eines Toasters in einem dritten Zustand;
- Figur 11: eine perspektivische Teildarstellung der ersten Gehäusebaugruppe sowie von der zweiten Gehäusebaugruppe zugeordneten Komponenten mit einem an der ersten Gehäusebaugruppe befestigten und mit der zweiten Gehäusebaugruppe zusammenwirkenden Bimetallelement eines Toasters;
- Figur 12: eine perspektivische Teildarstellung der ersten Gehäusebaugruppe sowie von der zweiten Gehäusebaugruppe zugeordneten Komponenten mit einem an der ersten Gehäusebaugruppe befestigten und mit der zweiten Gehäusebaugruppe zusammenwirkenden Bimetallelement mit Merkmalen eines erfindungsgemäßen Toasters in einem ersten Zustand;
- Figur 13: eine perspektivische Teildarstellung der ersten Gehäusebaugruppe sowie von der zweiten Gehäusebaugruppe zugeordneten Komponenten mit einem an der ersten Gehäusebaugruppe befestigten und mit der zweiten Gehäusebaugruppe zusammenwirkenden Bimetallelement eines Toasters in einem zweiten Zustand;
- Figur 14: eine perspektivische Teilansicht der ersten Gehäusebaugruppe des Toasters in einem ersten Zustand;
- Figur 15: eine perspektivische geschnittene Teilansicht der ersten Gehäusebaugruppe des Toasters in einem zweiten Zustand;
- Figur 16: eine perspektivische geschnittene Teilansicht der ersten Gehäusebaugruppe des Toasters in einem dritten Zustand;
- Figur 17: eine Röstgutträgerverriegelungseinrichtung in einem ersten Zustand;
- Figur 18: die Röstgutträgerverriegelungseinrichtung gemäß Figur 17 in einem zweiten Zustand;
- Figur 19: eine weitere Röstgutträgerverriegelungseinrichtung in einem ersten Zustand;
- Figur 20: die weitere Röstgutträgerverriegelungseinrichtung gemäß Figur 19 in einem zweiten Zustand;
- Figur 21: einen nicht erfindungsgemäßen Hebe-/Senkmechanismus für einen Brötchenaufsatz in einem ersten Zu- stand;
- Figur 22: den nicht erfindungsgemäßen Hebe-/Senkmechanismus für einen Brötchenaufsatz in einem zweiten Zu- stand.

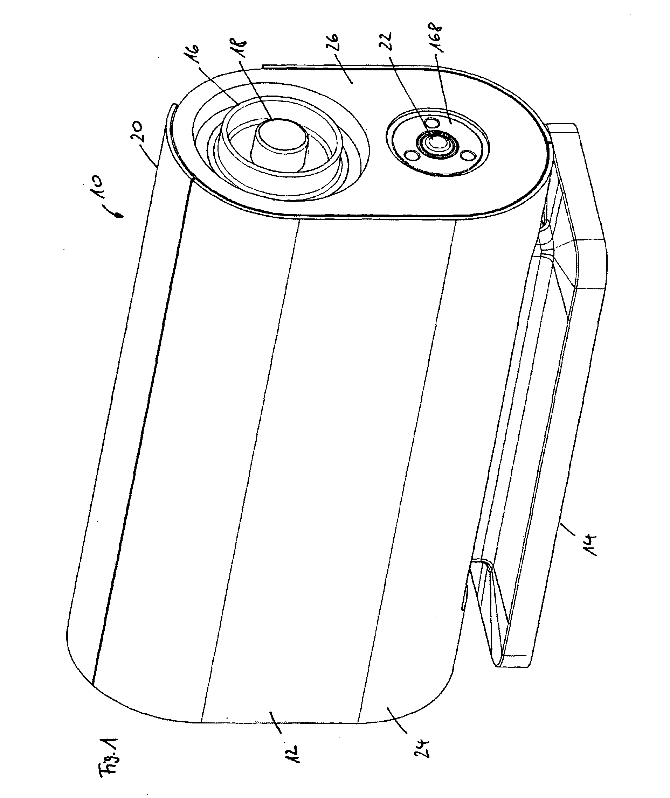

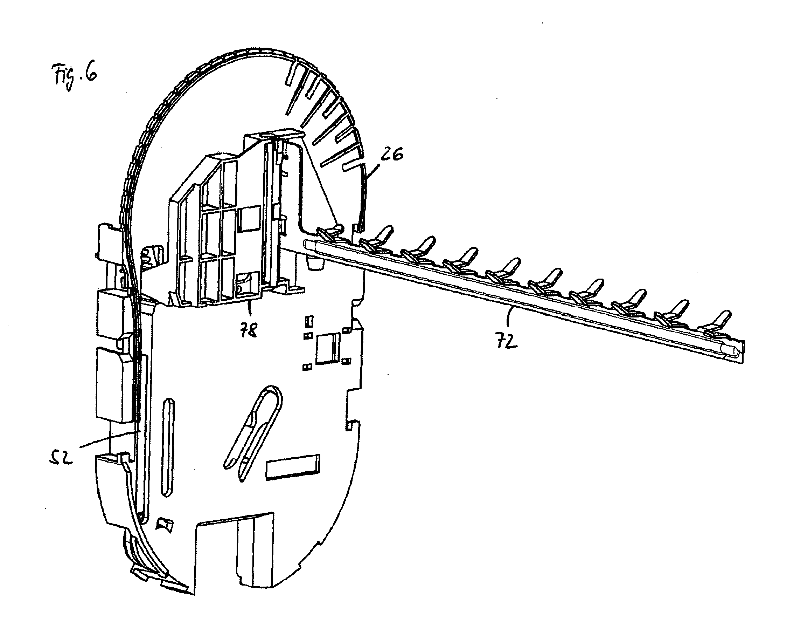

Figur 1 zeigt eine perspektivische Darstellung eines Toasters. Der Toaster 10 umfasst ein Gehäuse 12 und einen das Gehäuse 12 tragenden Fuß 14. An beziehungsweise in dem Gehäuse 12 sind Bedienelemente angeordnet. Ein erstes Bedienelement ist als Drehknopf 16 ausgebildet. Dieser Drehknopf 16 dient insbesondere dem Absenken eines in dem Toaster angeordneten Röstgutträgers 72 (vergleiche Figur 6). Ein weiteres Bedienelement ist ebenfalls als Drehknopf 18 ausgebildet. Dieser Drehknopf 18 dient dazu, einen Deckel 20 mittels einer Drehbewegung des Drehknopfes 18 zu verschließen. Weiterhin lässt sich durch Drücken des Drehknopfes 18 und einer damit verbundenen axialen Verschiebung des Drehknopfes gegen eine Federkraft der Deckel 20 öffnen. Der konzentrisch mit dem zur Deckelbedienung vorgesehenen Drehknopf 18 angeordnete Drehknopf 16 veranlasst beim Absenken des Röstgutträgers weiterhin ein Öffnen des Deckels 20, sofern sich dieser im geschlossenen Zustand befindet, sowie ein Einschalten des Toasters 10. Als weiteres Bedienelement ist ein Ausschalter 22 vorgesehen. Bei Betätigung dieses Ausschalters 22 wird der Röstgutträger angehoben, und der Toaster 10 wird in einen stromlosen Zustand überführt. Ein weiteres Bedienelement ist als Stellrad 168 ausgebildet. Dieses Stellrad 168 dient in erster Linie dazu, eine Voreinstellung des Röstgrades vorzunehmen. Das Gehäuse 12 besteht im Wesentlichen aus zwei Gehäusebaugruppen 24, 26, wobei die bisher genannten Bedienelemente im Wesentlichen der zweiten Gehäusebaugruppe 26 zugeordnet sind.

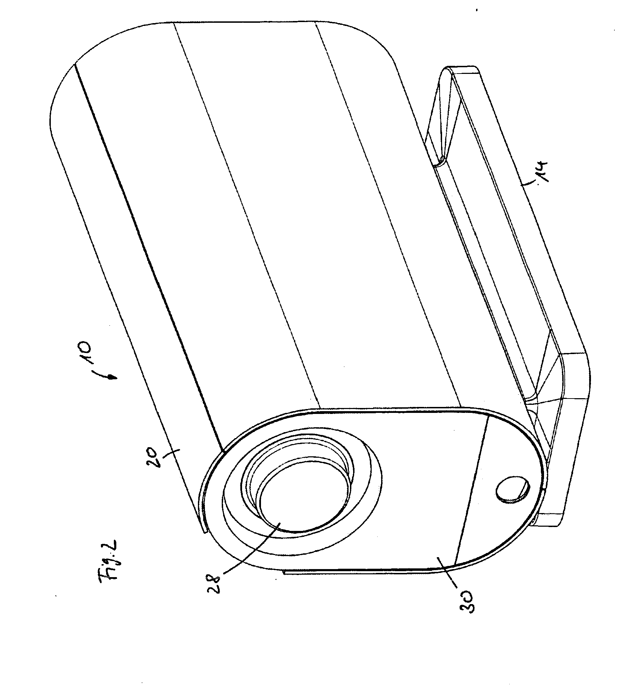

Figur 2 zeigt eine weitere perspektivische Darstellung eines Toasters. In dieser Darstellung des Toasters 10 ist die der zweiten Gehäusebaugruppe 26 gegenüberliegende Seite erkennbar. Auch hier ist ein Drehknopf 28 in einer dritten Gehäusebaugruppe 30 vorgesehen. Dieser Drehknopf 28 dient dem Anheben und dem Absenken eines im Toaster 10 integrierten Brötchenaufsatzes. Der Begriff Brötchenaufsatz bedeutet im Rahmen der vorliegenden Offenbarung nicht notwendigerweise, dass dieser vom Toaster abnehmbar und auf den Toaster wieder aufsetzbar ist. Vielmehr werden auch fest mit dem Toaster verbundene Mechanismen als Brötchenaufsatz bezeichnet.

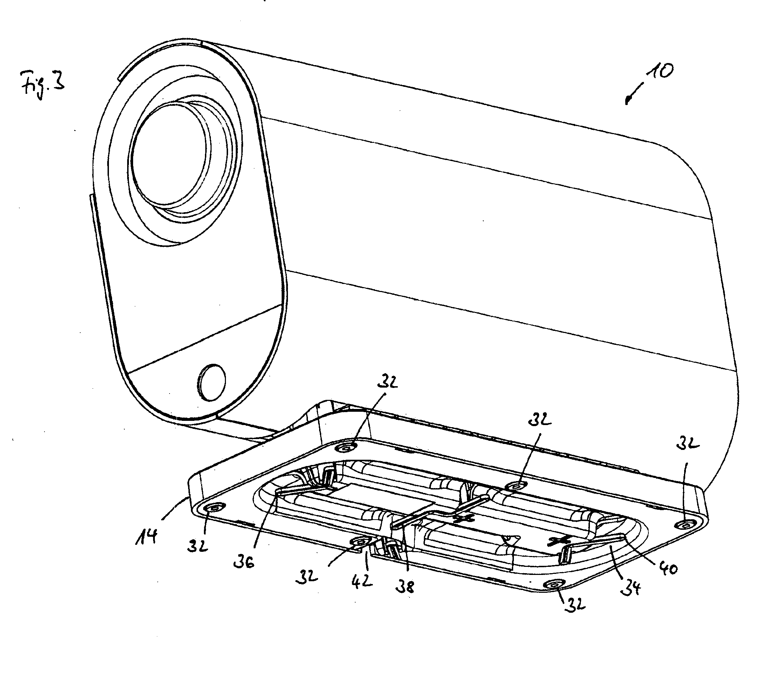

Figur 3 zeigt eine weitere perspektivische Darstellung eines Toasters. An dem Fuß 14 des Toasters sind mehrere rutschfeste Standnoppen 32 sowie eine Kabelaufnahme 34 vorgesehen. Ein (nicht dargestelltes) Stromkabel wird im (teilweise) aufgewickelten Zustand durch Halteelemente 36, 38, 40 gehalten, so dass es auch beim Anheben des Toasters nicht aus der Kabelaufnahme 34 herausfällt. Um das Stromkabel im (teilweise) aufgewickelten oder im abgewickelten Zustand aus dem Bereich unter dem Fuß 14 herauszuführen, ist eine seitlich angeordnete Durchführung 42 vorgesehen.

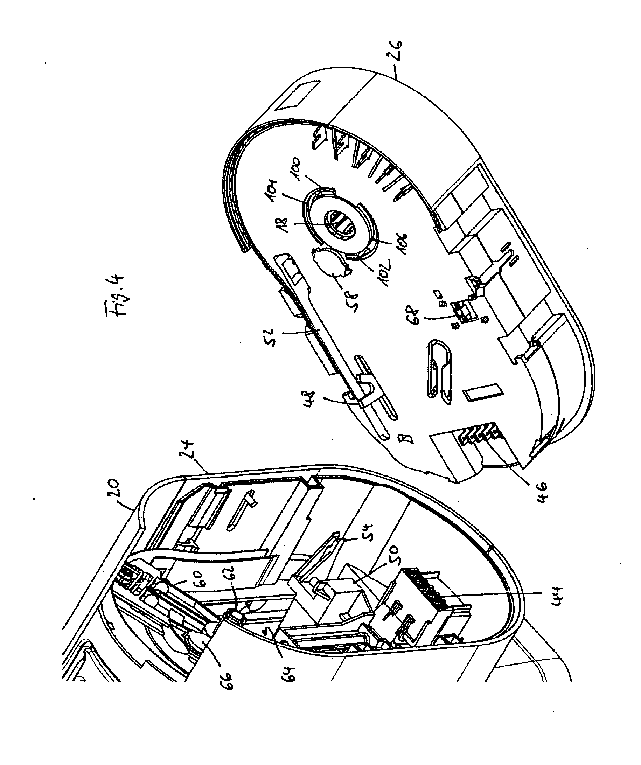

Figur 4 zeigt eine perspektivische Teildarstellung einer ersten Gehäusebaugruppe sowie eine perspektivische Darstellung einer zweiten Gehäusebaugruppe eines Toasters. Das Gehäuse ist in seine erste Gehäusebaugruppe 24 und seine zweite Gehäusebaugruppe 26 zerlegt. In der ersten Gehäusebaugruppe 24 sind (nicht dargestellte) Heizstäbe angeordnet, die durch eine in der zweiten Gehäusebaugruppe 26 angeordnete (nicht dargestellte) elektronische Steuerung angesteuert werden. Um eine elektrische Verbindung zwischen den elektrischen Bauteilen in der ersten Gehäusebaugruppe 24 und der elektronischen Steuerung in der zweiten Gehäusebaugruppe 26 herzustellen, weisen die erste Gehäusebaugruppe 24 und die zweite Gehäusebaugruppe 26 jeweils elektrische Schnittstellen 44, 46 auf, die als Stecker 44 in der ersten Gehäusebaugruppe 24 beziehungsweise als auf einer (nicht dargestellten) Steuerungsplatine aufgesetzte Steckfahnen 46 realisiert sind. Aufgrund einer geeigneten und stabilen Anordnung dieser Verbindungselemente erfolgt beim Zusammenfügen des Gehäuses automatisch eine elektrische Kontaktierung.

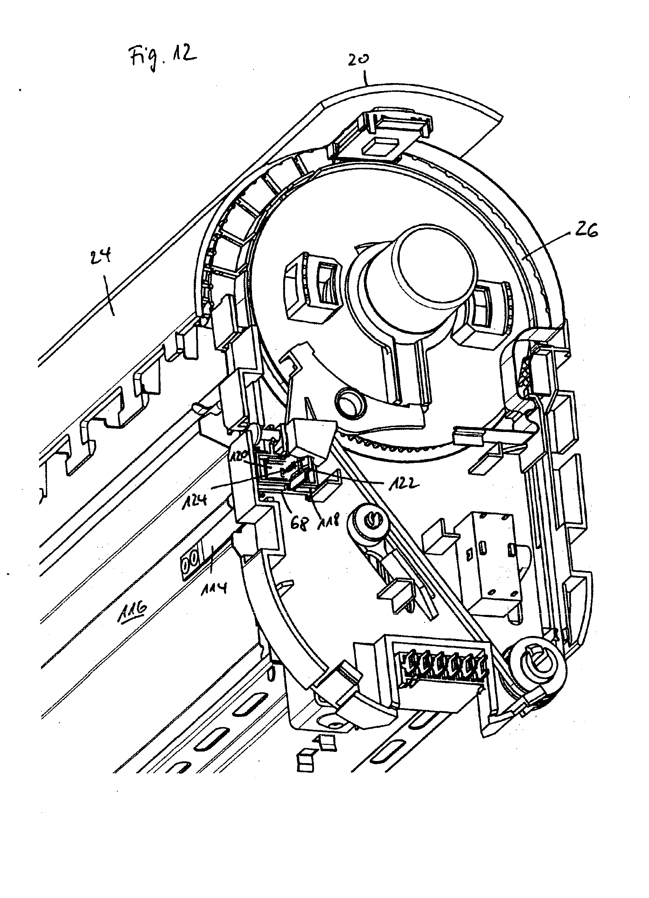

Die zweite Gehäusebaugruppe enthält weiterhin einen Schalthebel 48, der von einem in der ersten Gehäusebaugruppe 24 angeordneten, mit dem Röstgutträger verbundenen Mitnehmer 50 beim Absenken des Röstgutträgers nach unten umgelegt und beim Anheben des Röstgutträgers nach oben umgelegt wird. Der Schalthebel 48 ist an einem in der zweiten Gehäusebaugruppe 46 angeordneten Schalter 126 (vergleiche zum Beispiel Figur 12) angebracht. Der Mitnehmer 50 ist in der vorliegenden Darstellung in der abgesenkten Position des Röstgutträgers dargestellt. Über das Zusammenwirken von Schalthebel 48 und Mitnehmer 50 liegt eine mechanische Schnittstelle zwischen der ersten Gehäusebaugruppe und der zweiten Gehäusebaugruppe vor.

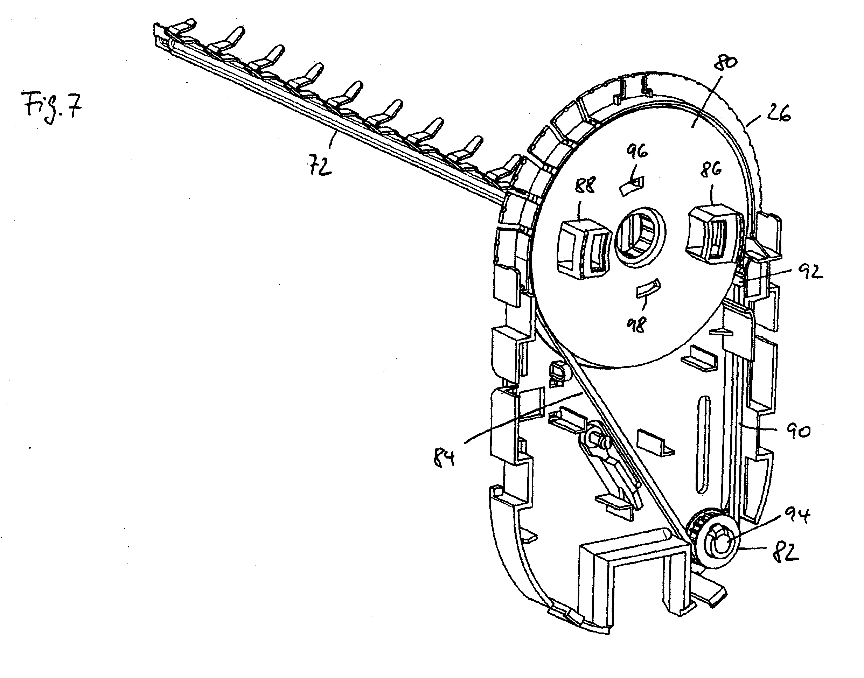

Die mechanische Schnittstelle zwischen den Gehäusebaugruppen 24, 26 eröffnet weiterhin die Möglichkeit, durch Betätigung des Drehknopfes 16 den Röstgutträger und den Mitnehmer 50 in deren abgesenkte Stellung zu bewegen. Zu diesem Zweck ist ein Schlitz 52 in der zweiten Gehäusebaugruppe 26 vorgesehen, durch den eine in der zweiten Gehäusebaugruppe 26 angeordnete Mechanik (siehe hierzu insbesondere Figur 7 und die entsprechende Erläuterung) erreichbar ist. Diese Mechanik wirkt mit einem im zusammengebauten Zustand des Gehäuses durch den Schlitz 52 ragendes Gegenstück 54 zusammen, so dass hierdurch der Röstgutträger und der Mitnehmer 50 gegen die Kraft einer (nicht dargestellten) Feder abgesenkt werden können. Im abgesenkten Zustand wird die in der ersten Gehäusebaugruppe 24 angeordnete Mechanik verriegelt. Durch Freigeben dieser Verriegelung kann die Mechanik durch die Federkraft angehoben werden, wobei diese Bewegung mit einer Bewegung der Mechanik in der zweiten Gehäusebaugruppe 26 korreliert ist. Insbesondere findet auch eine Drehung des Drehknopfes 16 beim Anheben des Röstgutträgers statt. Diese Drehbewegung und damit auch die Aufwärtsbewegung des Röstgutträgers werden durch ein gedämpftes Zahnrad 58 gedämpft, was insbesondere im Zusammenhang mit Figur 7 noch näher erläutert wird.

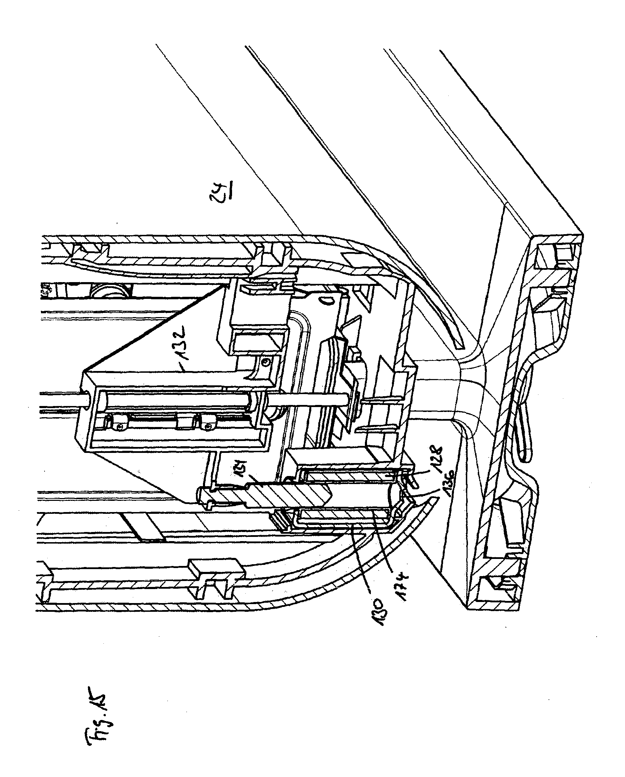

Es ist weiterhin ein Teil der die Bewegung des Deckels 20 führenden Mechanik gezeigt. Der im geöffneten Zustand dargestellte Deckel 20 ist über ein sich radial erstreckendes Verbindungselement 60 mit einer Welle 62 verbunden. Auf dieser Welle 62 sitzt im zusammengebauten Zustand des Gehäuses der Drehknopf 18 auf, dessen Inneres in der vorliegenden Darstellung zu erkennen ist. Indem der Drehknopf 18 gedreht wird, kann der Deckel 20 gegen eine Federkraft geschlossen werden. Die die Gegenkraft aufbringende Feder greift an einem Gehäuseabschnitt 64 sowie einem mit der Welle 62 in Verbindung stehenden Fortsatz an, wobei dieser Fortsatz dem Verbindungselement 60 radial gegenüberliegend angeordnet ist. Die Feder 138 und der Fortsatz 140 werden in der vorliegenden Darstellung durch das Gehäuse verdeckt (vergleiche Figur 15). Im geschlossenen Zustand kann der Deckel 20 verriegeln und durch axiales Verschieben, das heißt durch Drücken des Drehknopfes 18 wieder freigegeben werden. Der Deckel wird dann durch die Federkraft wieder in seine geöffnete Stellung überführt, wobei diese Bewegung wiederum durch ein in seiner Drehbewegung gedämpftes Zahnrad 66, das mit einem gezahnten Abschnitt der Welle 62 kämmt, gedämpft ist.

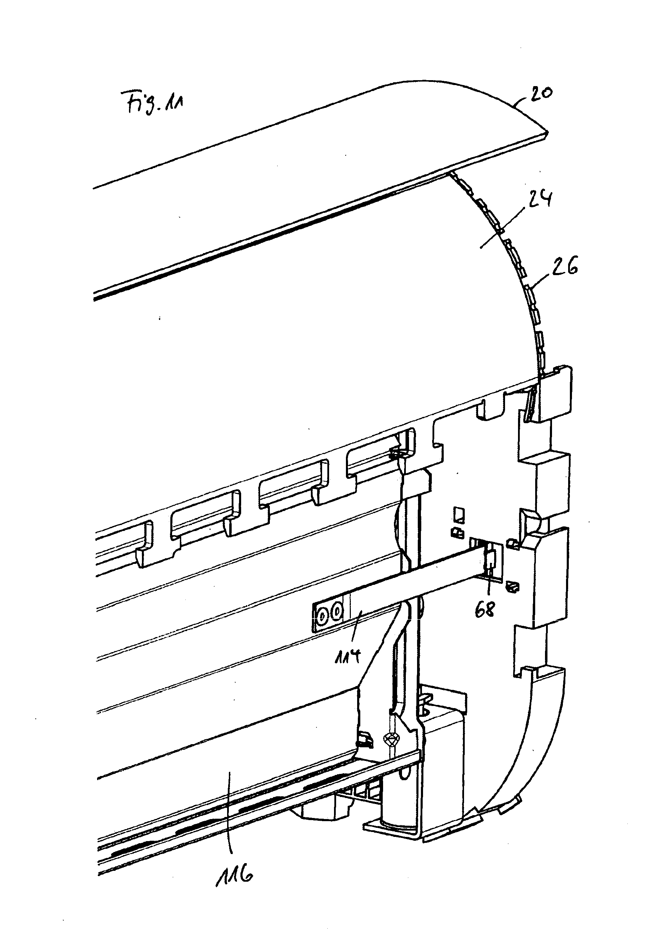

Eine weitere Komponente der mechanischen Schnittstelle zwischen erster Gehäusebaugruppe 24 und zweiter Gehäusebaugruppe 26 bildet ein an der zweiten Gehäusebaugruppe 26 angeordnetes Kippelement 68, das mit einem in der zweiten Gehäusebaugruppe 26 angeordneten, hier nicht sichtbaren Bimetallelement zusammenwirkt. Zur Erläuterung der diesbezüglichen Funktionsweise wird insbesondere auf die Figuren 11 und 12 sowie deren Beschreibung verwiesen.

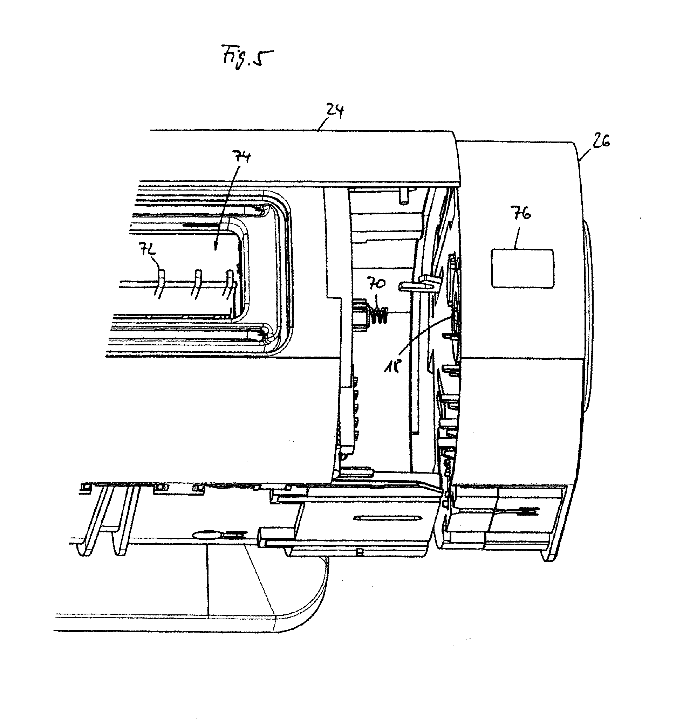

Figur 5 zeigt eine perspektivische Teildarstellung der ersten Gehäusebaugruppe sowie eine perspektivische Darstellung der zweiten Gehäusebaugruppe eines Toasters während des Zusammenfügens der Gehäusebaugruppen. Es ist eine an der Welle 62 angeordnete Feder 70 zu erkennen, die die Gegenkraft gegen die durch Drücken bewirkte axiale Verschiebung des Drehknopfes 18 aufbringt. Diese Feder 70 muss nicht notwendigerweise an der Welle 62 befestigt sein. Sie kann sich auch innerhalb der zweiten Gehäusebaugruppe abstützen.

In der vorliegenden Darstellung sind in der ersten Gehäusebaugruppe 24 weiterhin ein Röstgutträger 72 sowie eine Röstgutaufnahmeöffnung 74 erkennbar. In der zweiten Gehäusebaugruppe 26 ist ein Anzeigeelement 76 vorgesehen, das zur digitalen Anzeige des vorgewählten Röstgrades sowie der noch verbleibenden Röstdauer in Echtzeit dient. Das Anzeigeelement 76 steht über eine Flachkabelverbindung direkt mit der in der zweiten Gehäusebaugruppe 26 angeordneten elektronischen Steuerung in Verbindung und wird von dieser angesteuert. Außerhalb des eigentlichen Röstvorganges zeigt das Anzeigeelement einen vorgewählten Röstgrad an. Vorzugsweise muss das Anzeigeelement zum Zwecke der Röstgradanzeige aktiviert werden, was beispielsweise durch ein eigens hierfür vorgesehenes Bedienelement, ein Betätigen des Ausschalters 22 und/oder ein Betätigen des Stellrades 168 erfolgen kann. Ebenfalls ist es denkbar, dass das vorzugsweise als LCD-Anzeige realisierte Anzeigeelement bei minimalem Energieverbrauch permanent in Betrieb ist, sofern der Toaster mit dem Stromnetz gekoppelt ist. Ebenfalls ist eine Pufferung des Betriebs der Anzeige selbst bei ausgestecktem Toaster denkbar. Wird der Toaster im Zusammenhang mit dem Absenken des Röstgutträgers in Betrieb genommen, so wird auf dem Anzeigeelement 76 nicht länger der vorgewählte Röstgrad sondern die für den Röstvorgang benötigte Restzeit in Echtzeit angezeigt. Die für den Röstvorgang benötigte Restzeit kann von verschiedenen Größen abhängen, die für die Bestimmung und die Anzeige der Restzeit berücksichtigt werden können, beispielsweise von der Temperatur des Toasters vor dem Röstgang und/oder der seit dem letzten Röstvorgang verstrichenen Zeit. Ebenfalls kann der beim letzten Röstvorgang eingestellte Röstgrad berücksichtigt werden, da bei sehr kurzen Röstzeiten eine geringere Vorwärmung des Toasters vorliegen wird als bei sehr langen Röstzeiten. Über die Berücksichtigung der verstrichenen Zeit seit dem letzten Röstvorgang erhält man letztlich auch ein Maß für die Vorwärmung des Toasters. Es ist beispielsweise möglich, dass Werte für die verstrichene Zeit in der elektronischen Steuerung im Rahmen einer Tabelle mit Temperaturschätzwerten korreliert sind beziehungsweise mit irgendwelchen Parametern, die bei der Umrechnung von vorgewähltem Röstgrad in zu Anfang des Röstvorgangs verbleibende Echtzeit berücksichtigt werden.

Figur 6 zeigt eine perspektivische Darstellung eines Teils der zweiten Gehäusebaugruppe sowie eines mit der zweiten Gehäusebaugruppe zusammenwirkenden Röstgutträgers eines Toasters. Es ist der Teil der zweiten Gehäusebaugruppe 26 darstellt, der im zusammengebauten Zustand des Toasters der ersten Gehäusebaugruppe zugewandt ist. Zusätzlich sind ein Röstgutträger 72 und eine Röstgutträgerhalterung 78 dargestellt. Die Röstgutträgerhalterung 78 und hierdurch auch der Röstgutträger 72 sind nach unten entlang des Schlitzes 52 verschiebbar.

Figur 7 zeigt eine weitere perspektivische Darstellung eines Teils der zweiten Gehäusebaugruppe sowie eines mit der zweiten Gehäusebaugruppe zusammenwirkenden Röstgutträgers mit Merkmalen eines erfindungsgemäßen Toasters. Hier ist der in der zweiten Gehäusebaugruppe 26 angeordnete Mechanismus zum Verschieben des Röstgutträgers 72 und zum Einschalten des Toasters erkennbar. Es ist wiederum die im zusammengebauten Zustand des Toasters der ersten Gehäusebaugruppe zugewandte Seite der zweiten Gehäusebaugruppe dargestellt, wobei nun das Innere der zweiten Gehäusebaugruppe sichtbar ist. Es sind ein Riemenrad 80 und ein Umlenkrad 82 erkennbar, über die ein Zahnriemen 84 gelegt ist. Das Riemenrad 80 und das Umlenkrad 82 weisen zum Zwecke der Kraftvermittlung mit dem Zahnriemen 84 jeweils eine Außenverzahnung auf. An dem Riemenrad 80 sind zwei Steckaufnahmen 86, 88 angeordnet, in die Fortsätze des hier nicht dargestellten Drehknopfes 16 (vergleiche zum Beispiel Figur 1) in axiale Richtung einsteckbar sind. Somit kann das Riemenrad 80 durch eine Drehbewegung des genannten Drehknopfes 16 ebenfalls in Rotation versetzt werden. Folglich führt der senkrecht verlaufende Riemenabschnitt 90 des Zahnriemens 84 eine Translationsbewegung aus, die durch eine Drehbewegung des Riemenrades 80 erzeugt wird. Einem mit dem Röstgutträger 72 über die Röstguthalterung 78 verbundenen Gegenstück 92, das in den Zahnriemen 84 eingreift, wird so durch Drehung des Riemenrades 80 eine translatorische Bewegung vermittelt.

Die Bewegung des Zahnriemens 84 ist gedämpft. Dies wird durch mehrere Maßnahmen erreicht. Zum einen reibt der Zahnriemen 84 abschnittsweise an Gehäusebereichen beziehungsweise gehäusefesten Fortsätzen, zum anderen sind das Riemenrad 80 und das Umlenkrad 82 in ihrer Drehbewegung gedämpft. Das Umlenkrad 82 ist direkt durch ein mit dem Umlenkrad 82 konzentrisch angeordnetes Dämpfungselement 94 gedämpft. Das Riemenrad ist indirekt dadurch gedämpft, dass es in einem bezüglich seines Außenumfangs radial innenliegenden gezahnten Bereiches mit einem in seiner Drehbewegung gedämpften Zahnrad 58 (vergleiche Figur 4) kämmt. Durch die Dämpfung der Bewegung des Zahnriemens 84 wird das Hochschnellen des Röstgutträgers gebremst. Dies verringert die Geräuschentwicklung bei sich abschaltendem Toaster, und ein Herausschleudern des Röstgutes wird vermieden.

An dem Riemenrad 80 sind weiterhin Öffnungen 96, 98 erkennbar. Von diesen Öffnungen erstrecken sich in Richtung des dargestellten Gehäuseabschnittes 26 Fortsätze 100, 102 (vergleiche Figur 4), die in Öffnungsschlitzen 104, 106 des dargestellten Gehäuseabschnittes beweglich sind. Da die Öffnungsschlitze 104, 106 begrenzt sind, werden somit zwei Anschläge für die Drehbewegung des Riemenrades 80 zur Verfügung gestellt.

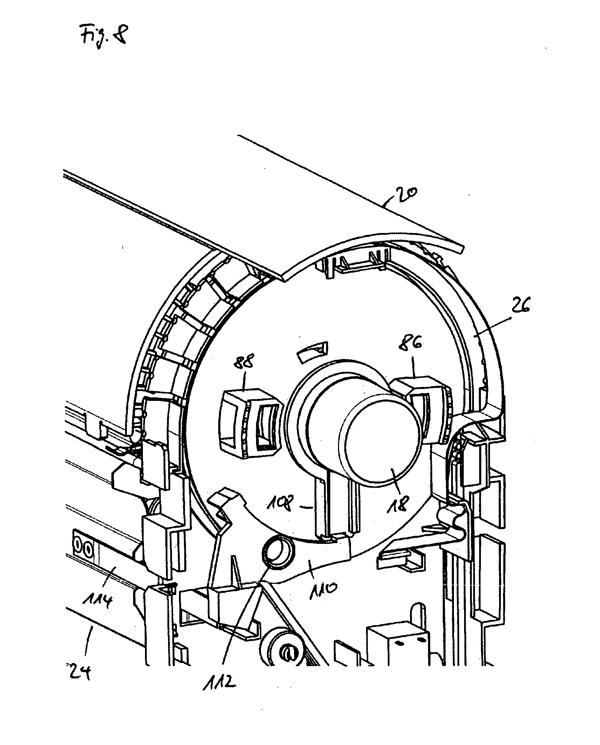

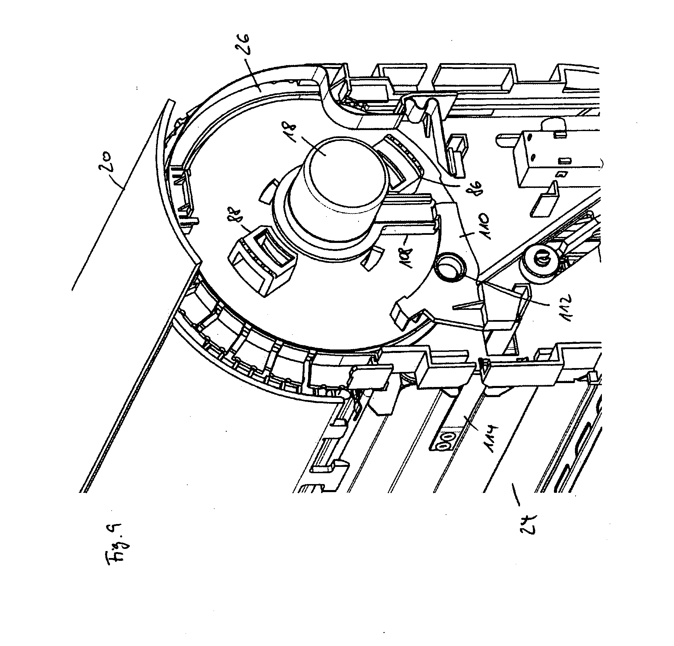

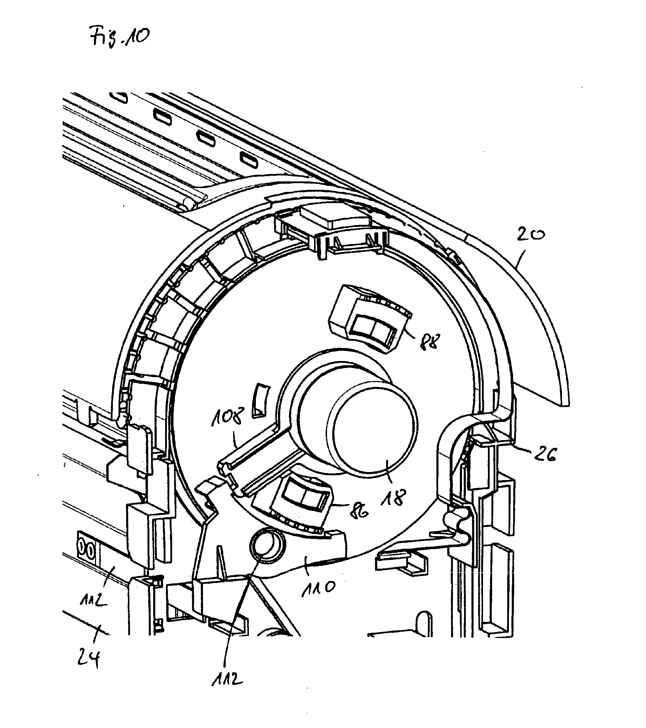

Figur 8 zeigt eine perspektivische Teildarstellung der ersten Gehäusebaugruppe sowie von der zweiten Gehäusebaugruppe zugeordneten Komponenten eines Toasters in einem ersten Zustand. Figur 9 zeigt eine perspektivische Teildarstellung der ersten Gehäusebaugruppe sowie von der zweiten Gehäusebaugruppe zugeordneten Komponenten eines erfindungsgemäßen Toasters in einem zweiten Zustand. Figur 10 zeigt eine perspektivische Teildarstellung der ersten Gehäusebaugruppe sowie von der zweiten Gehäusebaugruppe zugeordneten Komponenten eines erfindungsgemäßen Toasters in einem dritten Zustand. In diesen Darstellungen ist die zweite Gehäusebaugruppe 26 in die erste Gehäusebaugruppe 24 eingesetzt, wobei allerdings nur der der ersten Gehäusebaugruppe 24 zugewandte Gehäuseteil der zweiten Gehäusebaugruppe 26 dargestellt ist, um das Innere der zweiten Gehäusebaugruppe 26 erkennen zu können. Zur Vervollständigung der zweiten Gehäusebaugruppe 26 würde noch der der ersten Gehäusebaugruppe 24 abgewandte Gehäuseteil der zweiten Gehäusebaugruppe 26 aufgesetzt; nachfolgend würde der Drehknopf 16 in die Steckaufnahmen 86, 88 des Riemenrades 80 eingesetzt. Dabei rastet der Drehknopf 16 so in den Steckaufnahmen 86, 88 ein, dass ein unbeabsichtigtes Lösen ausgeschlossen ist. Die Steckaufnahme 86 erfüllt noch eine weitere Funktion, was anhand der Figuren 8 bis 10 erläutert wird. In dem in Figur 8 dargestellten Zustand ist der Deckel 20 geschlossen. Dies korrespondiert damit, dass ein Fortsatz 108 des Drehknopfes 18 über ein als Wippe 110 ausgebildetes Halte- beziehungsweise Verriegelungselement gehalten wird. Die Wippe 110 ist auf einer Achse 112 gelagert und um einige Grad schwenkbar. Wird nun das Riemenrad 80 im Uhrzeigersinn gedreht, so bewegt sich die Steckaufnahme 86 auf den Fortsatz 108 des Drehknopfes 18 zu. Ein Zustand, bei dem die Steckaufnahme 86 gerade Kontakt mit dem Fortsatz 108 aufnimmt, ist in Figur 9 dargestellt. In den in den Figuren 8 und 9 gezeigten Zuständen wird die Wippe 110 dadurch in dem den Drehknopf 18 verriegelnden Zustand gehalten, dass ein Bimetallelement 114 die Wippe 110 in die entsprechende Richtung mit Kraft beaufschlagt. Wird nun allerdings das Riemenrad 80 von Figur 9 ausgehend weiter im Uhrzeigersinn gedreht, so kann gegen die Kraft der Wippe 118 beziehungsweise des Bimetallelementes 114 die Steckaufnahme 86 als Mitnehmer dienen, so dass letztlich ein weiterer Zustand gemäß Figur 10 erreicht wird. In diesem Zustand ist der Deckel 20 geöffnet. Da durch die Drehbewegung des Riemenrades 80 einerseits das Röstgut abgesenkt und andererseits der Toaster eingeschaltet wird, kann durch die Zwangsmitnahme des Drehknopfes 18 ein Betrieb des Toasters bei geschlossenem Deckel 20 verhindert werden. Erst wenn der Toaster ausgeschaltet ist und das Riemenrad dementsprechend, ausgehend von Figur 10, gegen den Uhrzeigersinn zurückgedreht ist, kann der Deckel durch Drehen des Drehknopfes 18 wieder geschlossen werden, wobei hierzu allerdings weitere Vorraussetzungen erfüllt sein müssen, was nachfolgend mit Bezug auf die Figuren 11 bis 13 erläutert wird.

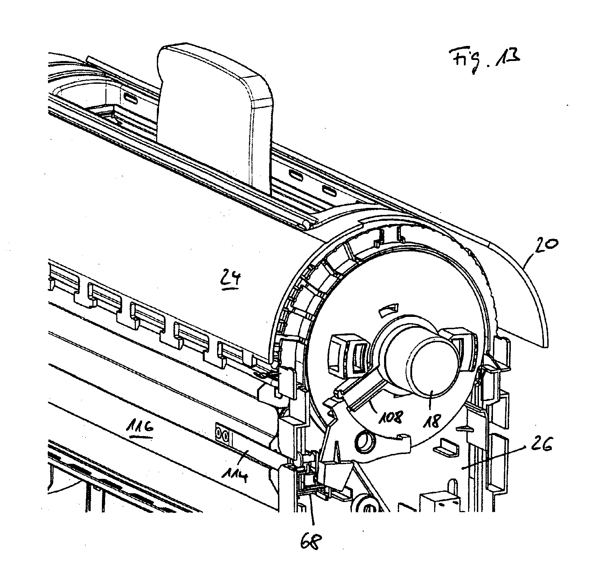

Figur 11 zeigt eine perspektivische Teildarstellung der ersten Gehäusebaugruppe sowie von der zweiten Gehäusebaugruppe zugeordneten Komponenten mit einem an der ersten Gehäusebaugruppe befestigten und mit der zweiten Gehäusebaugruppe zusammenwirkenden Bimetallelement eines Toasters. Figur 12 zeigt eine perspektivische Teildarstellung der ersten Gehäusebaugruppe sowie von der zweiten Gehäusebaugruppe zugeordneten Komponenten mit einem an der ersten Gehäusebaugruppe befestigten und mit der zweiten Gehäusebaugruppe zusammenwirkenden Bimetallelement eines erfindungsgemäßen Toasters in einem ersten Zustand. Figur 13 zeigt eine perspektivische Teildarstellung der ersten Gehäusebaugruppe sowie von der zweiten Gehäusebaugruppe zugeordneten Komponenten mit einem an der ersten Gehäusebaugruppe befestigten und mit der zweiten Gehäusebaugruppe zusammenwirkenden Bimetallelement eines erfindungsgemäßen Toasters in einem zweiten Zustand. Auf die erste Gehäusebaugruppe 24 ist wiederum der der ersten Gehäusebaugruppe 24 zugewandte Gehäuseteil der zweiten Gehäusebaugruppe 26 aufgesetzt. An einem in der ersten Gehäusebaugruppe 24 angeordneten, den Röstraum begrenzenden Reflektor 116 ist das bereits erwähnte Bimetallelement 114 mit thermisch leitender Verbindung zum Reflektor 116 angeordnet. Folglich führt das Bimetallelement 114 temperaturabhängige Bewegungen durch. Das Bimetallelement 114 ragt in die zweite Gehäusebaugruppe 26 hinein. Dort steht es mit einem als Adapter wirkenden Kippelement 68 in Verbindung. Bei Erwärmung des Reflektors 116 und somit des Bimetallelementes 114 bewegt sich das in das Kippelement 68 hineinragende Ende des Bimetallelementes 114 von der Mittelebene des Toasters weg nach außen, das heißt in der Darstellung gemäß Figur 11 nach rechts und in den Darstellungen gemäß den Figuren 12 und 13 nach links. In den Darstellungen der Figuren 12 und 13 ist das Innere der zweiten Gehäusebaugruppe 26 gezeigt, wobei auch Einzelheiten des Kippelementes 68 zu erkennen sind. Das Kippelement 68 umfasst im Wesentlichen ein mit dem Gehäuse vorzugsweise mit Spiel verbundenes Rahmenelement 118 und einen darin horizontal gleitenden Schlitten 120 auf. Senkrecht zu dem Rahmenelement 118 und dem Schlitten 120 ist ein die Öffnung des Rahmenelementes 118 in vertikale Richtung überbrückendes Brückenelement 122 vorgesehen. Dieses Brückenelement ist über eine Feder 124 mit dem Schlitten verbunden. In der in Figur 12 dargestellten Situation kippt das Brückenelement 122 in Richtung der vertikalen Mittelebene des Toasters, wobei die hierdurch eingenommene Endstellung durch die Feder 124 stabilisiert wird. Das Brückenelement stützt sich dabei an dem Rahmenelement 118 ab. In dieser Endstellung des Brückenelementes 122 nimmt die Wippe 110 ihre erste Stellung ein, in der sie den Deckel geschlossen hält. Bewegt sich nun das Bimetallelement 114 von der vertikalen Mittelebene des Toasters weg, so wird mit dem Bimetallelement 114 der Schlitten 120 in dieselbe Richtung verschoben. Bei Überschreiten einer Übergangsstellung klappt das Brückenelement 122 um, so dass es dann eine in Richtung der Gehäusewand, das heißt weg von der vertikalen Mittelebene des Toasters, geneigte Stellung einnimmt. Dieser Zustand ist in Figur 13 dargestellt. Es ist zu erkennen, dass die Wippe 110 nun ihre zweite Stellung einnimmt, in der sie den Fortsatz 108 des Drehknopfes 18 bei geöffnetem Deckel verriegelt. Folglich wird auch der Deckel in seiner geöffneten Stellung verriegelt, was konsequent ist, da das Bimetallelement 114 und folglich der Toaster erwärmt sind, das heißt in einem Zustand, in dem der Deckel 20 nicht verschlossen werden darf.

Bei einer weiteren Ausführungsform des Toasters gemäß den bereits beschriebenen Figuren 8 bis 10 wurde auf das Kippelement verzichtet. Vielmehr wirkt das Bimetallelement 114 direkt auf die als Halte- und Verriegelungseinrichtung wirkende Wippe 110. Hierdurch ist die Wippe 110 auch zwischen der Halte- und der Verriegelungsstellung überführbar, wobei jedoch im Vergleich zu der Ausführungsform gemäß den Figuren 11 bis 13 weniger definierte Endzustände der Wippe vorliegen. Weiterhin kann man im Zusammenhang mit der Ausführungsform gemäß den Figuren 11 bis 13 von einem "digitalen Schaltverhalten" an einem Umschaltpunkt sprechen, während die Ausführungsform gemäß den Figuren 8 bis 10 eine kontinuierliche Bewegung der Wippe 110 zwischen den Endstellungen bewirkt.

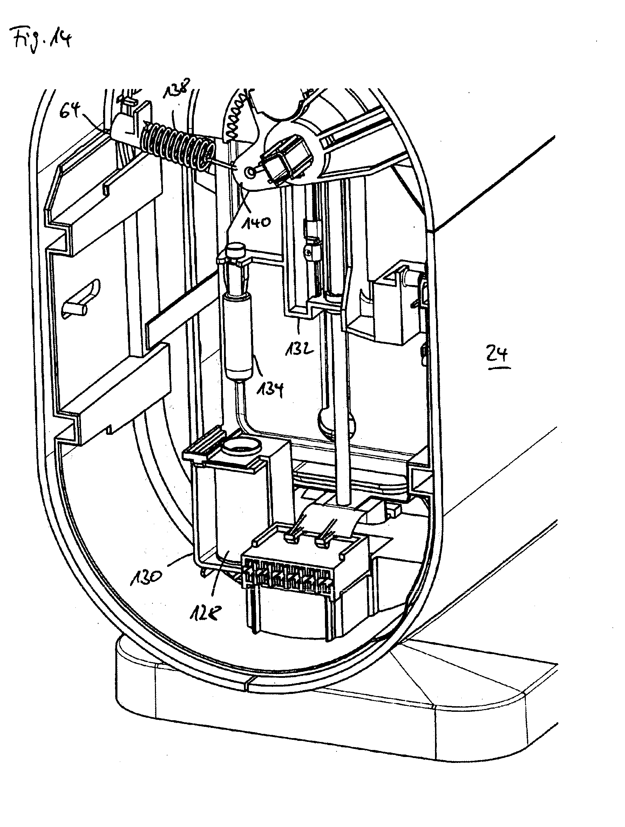

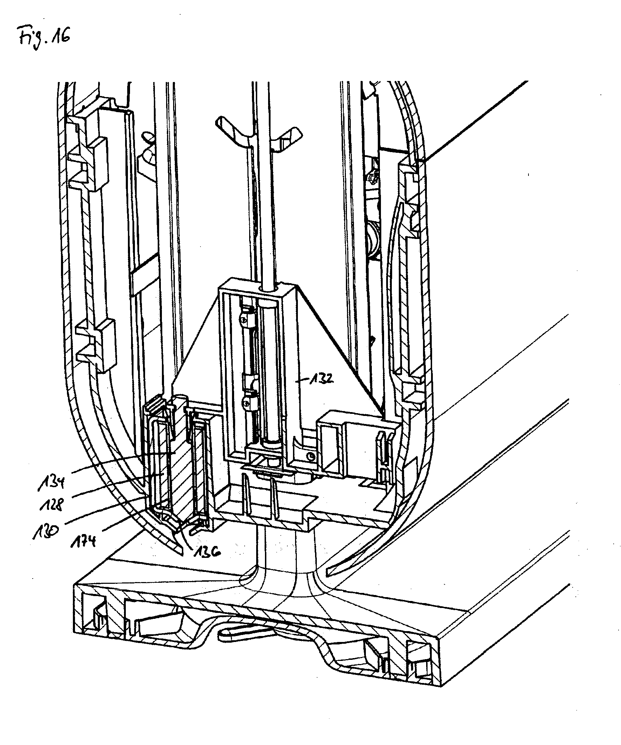

Figur 14 zeigt eine perspektivische Teilansicht der ersten Gehäusebaugruppe des Toasters in einem ersten Zustand. Figur 15 zeigt eine perspektivische geschnittene Teilansicht der ersten Gehäusebaugruppe des Toasters in einem zweiten Zustand. Figur 16 zeigt eine perspektivische geschnittene Teilansicht der ersten Gehäusebaugruppe mit Merkmalen des erfindungsgemäßen Toasters in einem dritten Zustand. Es ist ein Magnetkern 174 mit Spule 128 erkennbar, der zusammen mit einem Jochblech 130 in der ersten Gehäusebaugruppe 24 befestigt ist. In dem Röstgutabsenkmechanismus 132 ist ein Anker 134 verbunden, der hier, korrespondierend mit einer zumindest teilweise angehobenen Stellung des Röstgutträgers, ebenfalls in einer angehobenen Stellung gezeigt ist. In Figur 15 ist der Anker 134 bereits teilweise in die Spule 128 eingetaucht. In der geschnittenen Darstellung ist eine Öffnung 136 im Jochblech 130 erkennbar, die eine Verschmutzung des Magnetkerns im Inneren vermeidet; insbesondere können Brotkrümel, die von oben in den Magnetkern hineingefallen sind, durch die Öffnung 136 wieder herausfallen. Es ist bevorzugt, dass die Spule 128 vor dem Erreichen der in Figur 16 dargestellten Endlage des Ankers 134 bestromt wird, so dass die Kraft zum Erreichen der Endlage nicht beziehungsweise nur teilweise manuell aufgebracht werden muss; die Magnetkraft übernimmt im letzten Abschnitt des Absenkens diese Aufgabe. Wird der Toaster abgeschaltet, sei es aufgrund der automatischen Beendigung des Röstvorgangs oder aufgrund des Betätigens des Ausschalters, so wird das Magnetfeld durch Stromlosschalten der Spule abgebaut. Folglich kann der Anker durch die am Röstgutabsenkmechanismus angreifende Federkraft angehoben und in seine obere Endstellung gebracht werden.

Ergänzend zu Figur 14 ist zu bemerken, dass hier die Feder 138 zur Rückstellung des Deckels 20 in die geöffnete Position zu erkennen ist. Weiterhin ist auch der Fortsatz 140 an der Welle 62 gezeigt, an dem die Feder 138 eingehängt ist.

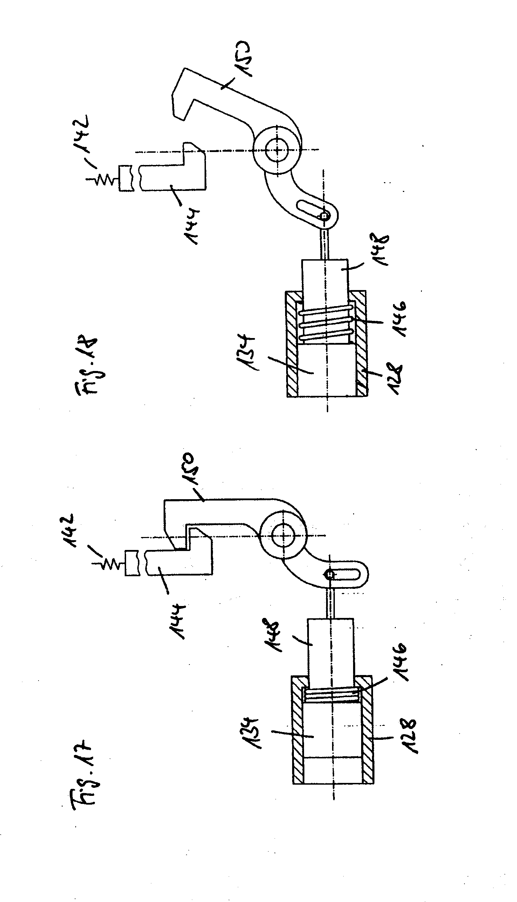

Figur 17 zeigt eine Röstgutträgerverriegelungseinrichtung in einem ersten Zustand. Figur 18 zeigt die Röstgutträgerverriegelungseinrichtung gemäß Figur 17 in einem zweiten Zustand. In dem in Figur 17 dargestellten Zustand ist der durch eine Feder 142 nach oben vorgespannte Röstgutträger 144 beziehungsweise ein damit in Verbindung stehendes Bauteil verriegelt. Die Verriegelung erfolgt dadurch, dass eine auf einem Magnetkern befindliche Spule 128 bestromt ist, so dass ein in der Spule angeordneter Anker 134 gegen die Kraft einer Feder 146 in die Spule 128 hineingetrieben wird. Folglich wird ein durch einen Fortsatz 148 am Anker 134 angelenkter Hebel 150 in seine Verriegelungsstellung überführt. Wird nun die Spule 128 stromlos, so kann die Feder 146 den Anker 134 zurückstellen, so dass der Hebel 150 den Röstgutträger 144 freigibt. Dieser kann folglich durch die Feder 142 angehoben werden.

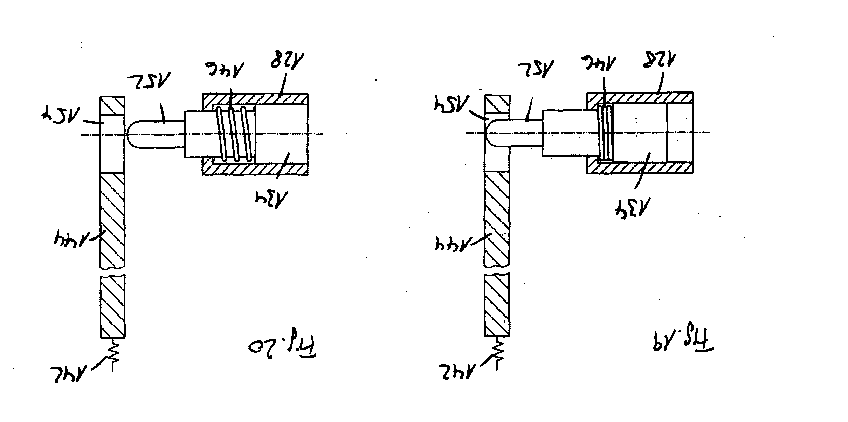

Figur 19 zeigt eine weitere Röstgutträgerverriegelungseinrichtung in einem ersten Zustand. Figur 20 zeigt die weitere Röstgutträgerverriegelungseinrichtung gemäß Figur 19 in einem zweiten Zustand. Das Arbeitsprinzip ist vergleichbar mit demjenigen gemäß den Figuren 17 und 18. Allerdings ist kein Hebel 150 zwischen dem Anker und dem Röstgutträger 144 vorgesehen. Vielmehr wird der Röstgutträger 144 dadurch in seiner abgesenkten Stellung verriegelt, dass ein Fortsatz 152 in eine Öffnung 154 des Röstgutträgers 144 eindringt. Im entriegelten Zustand gemäß Figur 20 wird der Anker durch die Federkraft zurückgetrieben, so dass der Fortsatz nicht mehr durch Eindringen in die Öffnung den Röstgutträger 144 im abgesenkten Zustand fixiert.

Den Ausführungsformen gemäß den Figuren 17 und 18 beziehungsweise 19 und 20 ist gemeinsam, dass im Vergleich zu den Ausführungsformen gemäß den Figuren 14 bis 16 eine geringere auf den Anker wirkende Kraft zum Halten des Röstgutträgers ausreichen kann, da die Federkraft der Feder 142 bei den Ausführungsformen gemäß den Figuren 17 bis 20 senkrecht zu der den Anker verschiebenden elektromagnetisch erzeugten Kraft angreift.

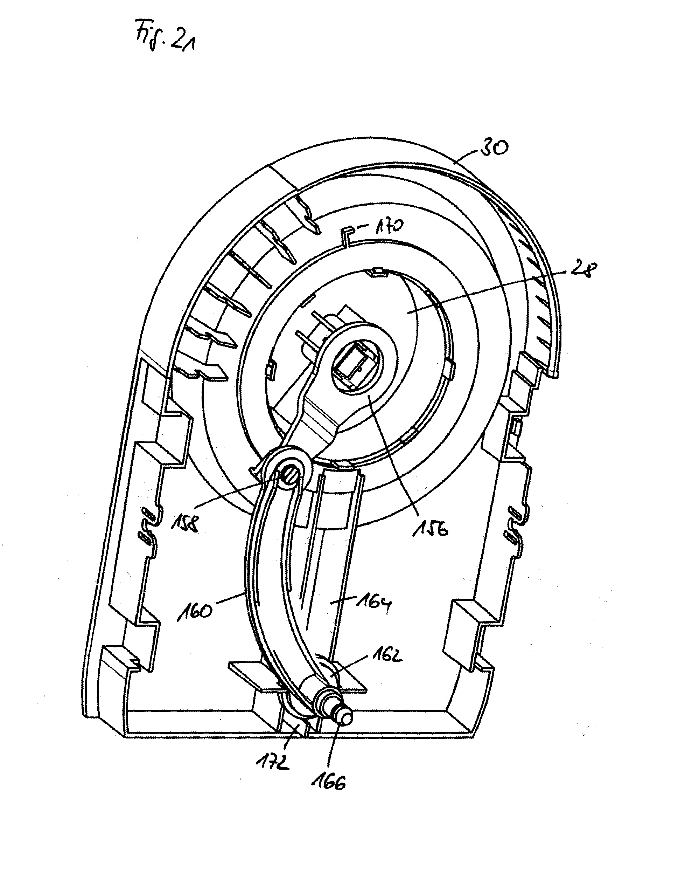

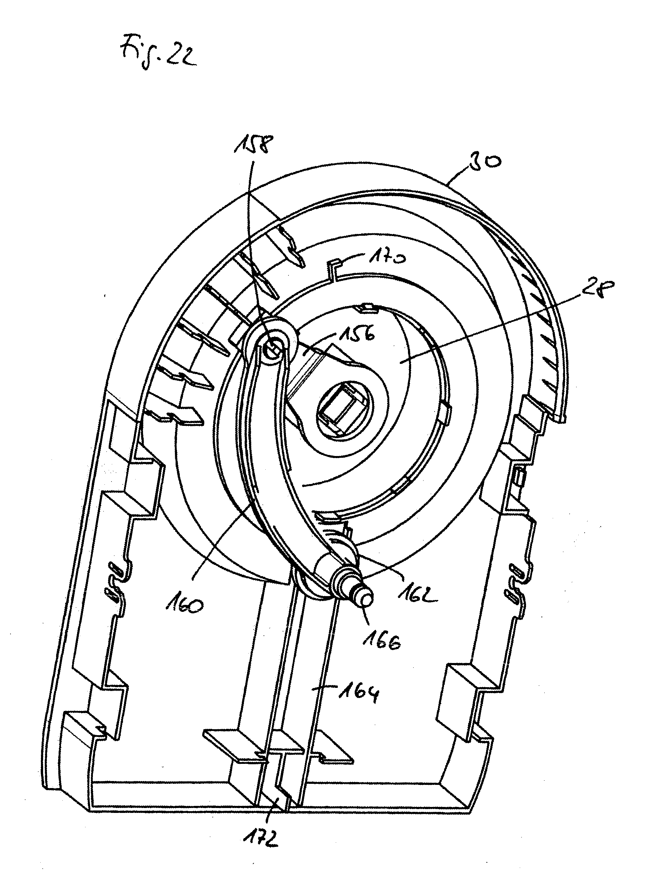

Figur 21 zeigt einen Hebe-/Senkmechanismus für einen Brötchenaufsatz in einem ersten Zustand. Figur 22 zeigt einen Hebe-/Senkmechanismus für einen Brötchenaufsatz in einem zweiten Zustand. Es ist die dritte Gehäusebaugruppe 30 dargestellt, wobei die Innenseite, das heißt die der ersten Gehäusebaugruppe zugewandte Seite erkennbar ist. An dem Drehknopf 28 ist ein Ausleger 156 angeordnet, der über ein einen Anlenkpunkt 158 bildendes Gelenk mit einer Pleuelstange 160 an einem ersten Ende der Pleuelstange 160 verbunden ist. An ihrem anderen Ende liegt die Pleuelstange 160 mit einem Führungselement 162 in einem vertikalen Führungsschlitz 164. Ein dem Führungselement 162 gegenüberliegender Fortsatz 166 bildet eine mechanische Schnittstelle zu Komponenten der ersten Gehäusebaugruppe, wobei der Fortsatz insbesondere in einen vertikal verschiebbaren Schieber zum Herausfahren beziehungsweise Einschieben eines in der ersten Gehäusebaugruppe angeordneten Brötchenaufsatzes eingreift. Betätigt man den Drehknopf 28 in der Weise, dass der Anlenkpunkt 158 angehoben wird, beispielsweise bis zu der in Figur 22 gezeigten Position, so wird auch der Fortsatz 166 und mit diesem der Schieber zum Ausfahren des Brötchenaufsatzes angehoben. Zum Absenken beziehungsweise Einfahren des Brötchenaufsatzes wird der Drehknopf 28 in die andere Richtung gedreht, so dass letztlich wieder der Zustand gemäß Figur 21 eingenommen werden kann. Im dargestellten Ausführungsbeispiel ist die Pleuelstange 160 gekrümmt ausgebildet. Dies hat den Vorteil, dass in der ersten Gehäusebaugruppe vorgesehene Komponenten, die im monierten Zustand dem Drehknopf 28 gegenüberliegen, die Bewegung des Mechanismus nicht behindern, auch nicht im vollständig angehobenen Zustand des Fortsatzes 166. Die Figuren 21 und 22 zeigen einen Mechanismus, dessen Bewegung durch das Anschlagen des Führungselementes 162 der Pleuelstange an einem oberen und unteren Ende des Führungsschlitzes 164 begrenzt ist. Der untere Anschlag 172 ist als Fortsatz an der dritten Gehäusebaugruppe 30 erkennbar. Wählt man eine längere oder anders geformte Pleuelstange, so kann die Bewegung auch durch einen Anschlag 170 an der dritten Gehäusebaugruppe 30 begrenzt werden. Der Anschlag 170 kann auch an einer anderen Position angeordnet sein, so dass ebenfalls bei den vorliegend dargestellten Längenverhältnissen ein solcher Anschlag 170 wirksam sein kann.

Es ist zu bemerken, dass der im Zusammenhang mit den Figuren 21, 22 beschriebene nicht erfindungsgemäße Hebe-/Senkmechanismus ebenso im Zusammenhang mit dem Absenken und Anheben eines Röstgutträgers verwendbar ist. Erfindungsgemäß ist der im Rahmen der vorliegenden Offenbarung beschriebene Zahnriemenmechanismus im Zusammenhang mit dem Absenken und Anheben eines Brötchenaufsatzes einsetzbar wie in Anspruch 1 definiert.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein wie in Anspruch 1 definiert.

## Patentansprüche

1. Toaster mit mindestens einem beweglichen Bauteil, das mit einer im Wesentlichen geradlinigen Bewegung zwischen einer ersten Stellung und einer zweiten Stellung bewegbar ist, und die im Wesentlichen geradlinige Bewegung durch eine Drehbewegung mittels Umsetzmittel (80, 82, 84) veranlasst wird, wobei die Umsetzmittel ein durch die Drehbewegung abschnittsweise geradlinig bewegbares Zugmittel (84) aufweisen, das mit dem beweglichen Bauteil gekoppelt ist, **dadurch gekennzeichnet, dass** das bewegliche Bauteil ein Brötchenaufsatz ist, der veranlasst durch die Drehbewegung zwischen einer angehobenen Stellung und einer abgesenkten Stellung überführbar ist.

2. Toaster nach Anspruch 1, **dadurch gekennzeichnet, dass** das Zugmittel (84) über ein Riemenrad (80) und ein Umlenkrad (82) geführt wird, das Riemenrad größer ist als das Umlenkrad und dem Riemenrad über mindestens ein Bedienelement (16) die Drehbewegung zuführbar ist.

3. Toaster nach Anspruch 2, **dadurch gekennzeichnet, dass** das Riemenrad (80) zwei Anschläge aufweist, worüber eine erste Endstellung und eine zweite Endstellung für die Drehbewegung definiert sind, die erste Endstellung mit der ersten Stellung des beweglichen Bauteils korrespondiert und die zweite Endstellung mit der zweiten Stellung des beweglichen Bauteils korrespondiert.

4. Toaster nach einem der vorhergehenden Ansprüche, **dadurch gekennzeichnet, dass** die Bewegung des Zugmittels (84) beziehungsweise der mitbewegten Bauteile unmittelbar und/oder mittelbar gedämpft ist.

5. Toaster nach Anspruch 4, **dadurch gekennzeichnet, dass** die Bewegung des Zugmittels (84) beziehungsweise der mitbewegten Bauteile durch Reibung des Zugmittels (84) gedämpft ist.

6. Toaster nach Anspruch 4 oder 5, **dadurch gekennzeichnet, dass** die Bewegung des Zugmittels (84) beziehungsweise der mitbewegten Bauteile durch ein in seiner Drehbewegung gedämpftes Zahnrad (58) gedämpft ist, das mit einem innerhalb des Außenumfangs des Riemenrades liegenden gezahnten Bereich des Riemenrades (80) kämmt.

7. Toaster nach Anspruch 4 bis 6, **dadurch gekennzeichnet, dass** die Bewegung des Zugmittels (84) beziehungsweise der mitbewegten Bauteile **dadurch** gedämpft ist, dass das Umlenkrad (82) in seiner Drehbewegung gedämpft ist.

## Claims

1. Toaster with at least one movable component, which is movable by a substantially rectilinear movement between a first setting and a second setting, and the substantially rectilinear movement is produced by a rotational movement by way of translating means (80, 82, 84), wherein the translating means comprise a traction means (84), which is movable rectilinearly in sections by the rotational movement and which is coupled with the movable component, **characterised in that** the movable component is a bread roll support which through the rotational movement is transferrable between a raised setting and a lowered setting.

2. Toaster according to claim 1, **characterised in that** the traction means (84) is led over a pulley (80) and a deflecting wheel (82), the pulley is larger than the deflecting wheel and the rotational movement can be delivered to the pulley by way of at least one operating element (16).

3. Toaster according to claim 2, **characterised in that** the pulley (80) has two abutments by which a first end setting and a second end setting for the rotational movement are defined, the first end setting corresponds with the first setting of the movable component and the second end setting corresponds with the second setting of the movable component.

4. Toaster according to any one of the preceding claims, **characterised in that** the movement of the traction means (84) or the components moved therewith is damped directly and/or indirectly.

5. Toaster according to claim 4, **characterised in that** the movement of the traction means (84) or of the components moved therewith is damped by friction of the traction means (84).

6. Toaster according to claim 4 or 5, **characterised in that** the movement of the traction means (84) or of the components moved therewith is damped by a gearwheel (58), which is damped in its rotational movement and which meshes with a toothed region, which lies within the outer circumference of the pulley, of the pulley (80).

7. Toaster according to any one of claims 4 to 6, **characterised in that** the movement of the traction means (84) or of the components moved therewith is damped in that the deflecting wheel (82) is damped in its rotational movement.

## Revendications

1. Grille-pain comprenant au moins un élément mobile qui peut être déplacé, par un mouvement essentiellement rectiligne, entre une première position et une seconde position et le mouvement essentiellement rectiligne est provoqué par un mouvement de rotation grâce à des moyens de conversion (80, 82, 84), les moyens de conversion comprenant un moyen de traction (84) qui est couplé à l'élément mobile et qui peut être mis en mouvement partiellement rectiligne par le mouvement de rotation, **caractérisé en ce que** l'élément mobile est un accessoire chauffe-petits pains qui peut être transféré d'une position élevée à une position abaissée, le transfert étant provoqué par le mouvement de rotation.

2. Grille-pain selon la revendication 1, **caractérisé en ce que** le moyen de traction (84) est guidé par une poulie de courroie (80) et une roue de renvoi (82), la poulie de courroie est plus grande que la roue de renvoi et le mouvement de rotation peut être transmis à la poulie de courroie par le biais d'au moins un élément de commande (16).

3. Grille-pain selon la revendication 2, **caractérisé en ce que** la poulie de courroie (80) est pourvue de deux butées grâce auxquelles sont définies une première position finale et une seconde position finale pour le mouvement de rotation, la première position finale correspond à la première position de l'élément mobile et la seconde position finale correspond à la seconde position de l'élément mobile.

4. Grille-pain selon l'une des revendications précédentes, **caractérisé en ce que** le mouvement du moyen de traction (84) respectivement des éléments entraînés est amorti directement et/ou indirectement.

5. Grille-pain selon la revendication 4, **caractérisé en ce que** le mouvement du moyen de traction (84) respectivement des éléments entraînés est amorti par frottement du moyen de traction (84).

6. Grille-pain selon la revendication 4 ou 5, **caractérisé en ce que** le mouvement du moyen de traction (84) respectivement des éléments entraînés est amorti par une roue dentée (58) dont le mouvement de rotation est amorti, qui s'engrène avec une zone dentée de la poulie de courroie (80) située à l'intérieur de la circonférence extérieure de la poulie de courroie.

7. Grille-pain selon la revendication 4 à 6, **caractérisé en ce que** l'amortissement du mouvement du moyen de traction (84) respectivement des éléments entraînés est amorti du fait que le mouvement de rotation de la roue de renvoi (82) est amorti.
